Europäisches Patentamt

European Patent Office

Office européen des brevets

(19)

(11) Veröffentlichungsnummer: **0 176 678**
**B1**

(12) **EUROPÄISCHE PATENTSCHRIFT**

(45) Veröffentlichungstag der Patentschrift:
**24.05.89**

(21) Anmeldenummer: **85108964.9**

(22) Anmeldetag: **18.07.85**

(51) Int. Cl.⁴: **A 01 F 29/12,** A 01 F 29/20,
A 01 F 29/02

(54) Häckselmaschine für landwirtschaftliches Erntegut.

(30) Priorität: **04.10.84 DE 3436372**

(43) Veröffentlichungstag der Anmeldung:
**09.04.86 Patentblatt 86/15**

(45) Bekanntmachung des Hinweises auf die Patenterteilung:
**24.05.89 Patentblatt 89/21**

(84) Benannte Vertragsstaaten:
**AT CH DE FR IT LI NL**

(56) Entgegenhaltungen:
**FR-A- 2 539 950**

(73) Patentinhaber: **CLAAS SAULGAU GMBH, Postfach 29,
D-7968 Saulgau (DE)**

(72) Erfinder: **Reber, Erwin, Mittelbergstrasse 13,
D-7968 Saulgau (DE)**
Erfinder: **Gebele, Josef, Hüttenreute 21,
D-7961 Hosskirch 2 (DE)**

## Beschreibung

Die Erfindung betrifft einen landwirtschaftlichen Häcksler mit einer der Häckselvorrichtung nachgeordneten weiteren Zerkleinerungs- und Auswurf-Vorrichtung nach dem Gattungsbegriff des Anspruches 1.

Maschinen dieser Art sind zum Beispiel in der DE-A 3 302 980 dargestellt. Der um eine der Quetschwalzen geführte Luftkanal soll verhindern, dass beim Häckselvorgang ein Luftstau vor den Quetschwalzen entsteht, der eine störungsfreie Einführung des von der Häckselvorrichtung kommenden Häckselgutes zwischen die Quetschwalzen ausschliessen würde. Es hat sich aber bei Versuchen nun herausgestellt, dass diese Massnahme der Luftführung nicht bei allen Arbeitsgängen ausreichend ist. Bei starkem Maisgutdurchsatz zum Beispiel benötigt der hinter den Quetschwalzen ausgestossene Erntegutstrom für eine störungsfreie Ausförderung mehr Luft, als die Häckselvorrichtung über den Luftführungskanal bringen kann. Es entsteht im Bereich des Gutausstosses hinter den Quetschwalzen ein Luftunterdruck, der die Auswurfleistung der Quetschwalzen bis zu einem unbefriedigenden Masse mindern kann. Ausserdem besteht beim Ernten von stark feuchtem Gut die Möglichkeit, dass bei Leerlauf der Maschine mit herabgesetzter Antriebsgeschwindigkeit der Häcksel- und Nachzerkleinerungs-Vorrichtung, beispielsweise wenn die Maschine am Feldrand gewendet werden soll, an der Innenwandung des Auswurfschachtes festgesetztes Häckselgut sich in Batzen löst und auf die Quetschwalzen herunterfällt. Von diesen wird es dann in den Luftführungskanal gefördert, wo es infolge der geringen Drehgeschwindigkeit und damit geringen Luftförderung der Häckselvorrichtung zu Verstopfungen kommen kann.

Aufgabe der Erfindung ist es, mit einfachen Mitteln ohne kostenaufwendige konstruktive Änderung eine verbesserte Ausführung zu schaffen, bei der das Entstehen eines Luftunterdruckes im Abwurfbereich hinter den Quetschwalzen sowie ein Zusetzen des Luftführungskanals nicht mehr möglich ist. Dies wird durch Massnahmen entsprechend dem Kennzeichen des Anspruches 1 und in weiterer Ausgestaltung entsprechend den Kennzeichnungsmerkmalen aus den übrigen Ansprüchen erreicht.

In der Zeichnung ist ein Ausführungsbeispiel der Erfindung, die sowohl bei einem Trommelals auch bei einem Scheibenrad-Häcksler Verwendung finden kann, in schematischer Darstellung gezeigt und nachfolgend beschrieben. Es zeigen:

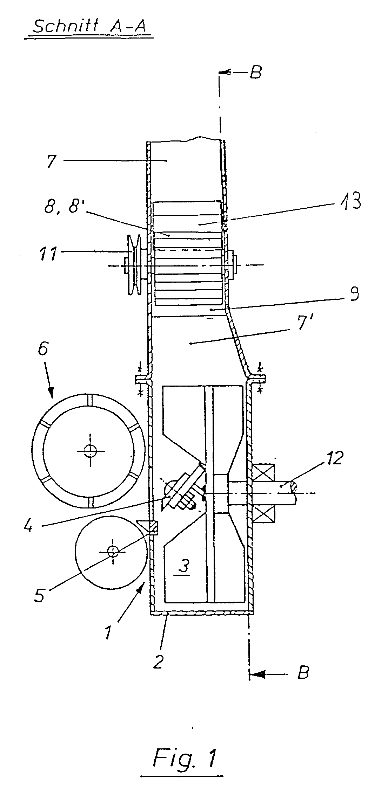

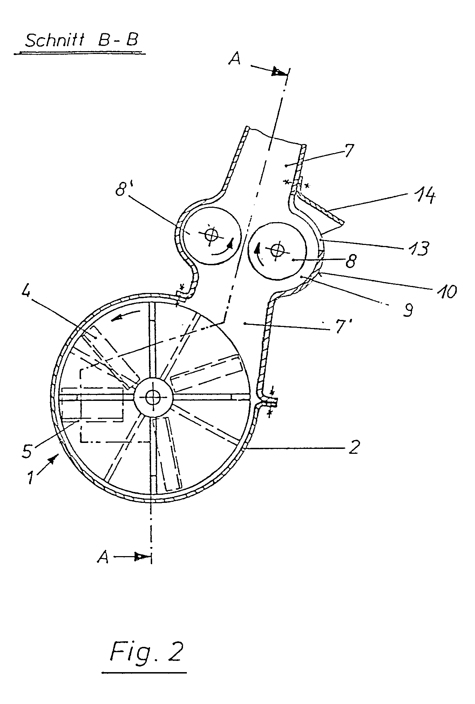

Fig. 1 eine erfindungsgemässe Ausführung an einem Scheibenradhäcksler im Querschnitt nach der Linie A/A in Fig. 2 und

Fig. 2 eine Schnittansicht nach der Linie B/B in Fig. 1

Die Erfindung kann sowohl bei einer selbstfahrenden als auch bei einer schleppergezogenen – oder getragenen Häckselmaschine Verwendung finden, so dass in der Zeichnung und der technischen Beschreibung auf die an sich bekannte Ausgestaltung des Rahmengestelles sowie der Maschine selbst nicht näher eingegangen ist.

Die Häckselvorrichtung 1 der ausschnittsweise und schematisch dargestellten Häckselmaschine weist eine in einem Gehäuse 2 umlaufend angetriebene Häckselscheibe 3 auf, deren Messer 4 mit einer gehäusefesten Gegenschneide 5 zusammenwirken. Der Häckselscheibe 3 ist eine an sich bekannte, aus umlaufend angetriebenen Zuführ- und Pressorganen bestehende Fördervorrichtung 6 für die Zuführung des zu häckselnden Gutes zur Häckselscheibe 3 vorgeordnet. An das Häckslergehäuse 2 schliesst ein Auswurfschacht 7, 7' an, durch den das gehäckselte Gut unter Zwischenschaltung einer Zerkleinerungs- und Auswurfvorrichtung 8, 8' in den Laderaum eines nachgezogenen oder nebenherfahrenden Wagens geschleudert wird.

Die der Häckselvorrichtung 1 nachgeordnete zusätzliche Zerkleinerungs- und Auswurf-Vorrichtung weist zwei über beispielsweise Keilriemenscheiben 11 gegenläufig angetriebene, profilierte Quetschwalzen 8, 8' auf, die im Auswurfschacht 7, 7' so angeordnet sind, dass sie das von der Häckselvorrichtung 1 kommmende Häckselgut zwischen sich hindurchführen und so eine Feinzerkleinerung der gehäckselten Maisspindeln und ein Aufschliessen der ungeschnitten durch die Häckselvorrichtung gehenden Maiskörner bewirken.

Um während des Häckselvorganges einen Luftstau vor den Quetschwalzen 8, 8' zu vermeiden, ist die eine Walze 8 in ihrem unwirksamen äusseren Umfangsbereich von einem Luftführungskanal 9 umgeben, der den vor den Walzen 8, 8' gelegenen Auswurfschachtteil 7' mit dem hinter den Walzen gelegenen Auswurfschachtteil 7 verbindet.

Gemäss der Erfindung ist in einer Aussenwandung 10 des Luftführungskanals 9 eine nach aussen führende Luftöffnung 13 vorgesehen und zwar an einer Stelle, die zum Teil vor dem Übergang der Wandung 10 in den hinter den Quetschwalzen 8, 8' gelegenen Auswurfschachtteil 7 liegt. Die Luftöffnung 13 ist in Breite der Quetschwalzen 8, 8' und mit einer Höhe von etwa 10 cm gestaltet und ist nach oben von einem schräg nach unten verlaufenden Blechteil 14 überdeckt.

Bei starkem Erntegutdurchsatz wird die fehlende Luft durch die Luftöffnung 13 angesaugt, so dass hinter den Quetschwalzen 8, 8' ein für die Ausförderung schädlicher Luftunterdruck nicht entstehen kann. Bei Herabfallen von Häckselgutbatzen auf die Quetschwalzen 8, 8' wird dieses Gut von der Walze 8 durch die Luftöffnung 13 nach aussen gefördert, so dass ein Zusetzen des Luftführungskanals 9 nicht mehr möglich ist.

## Patentansprüche

1. Häckselmaschine für landwirtschaftliches Erntegut mit einer der Häckselvorrichtung (1) im anschliessenden Auswurfschacht (7, 7') nachgeordneten weiteren Zerkleinerungs- und Auswurfvorrichtung (8, 8') in Gestalt zweier gegenläufig angetriebener und für eine Nachbeschleunigung des Häckselgutes ausgebildeter Quetschwalzen (8, 8'), von denen zumindest eine in ihrem unwirksamen, äusseren Umgangsbereich von einem Luftführungskanal (9) umgeben ist, der von den Walzen (8, 8') gelegenen Auswurfschachtteil (7') mit dem hinter den Walzen (8, 8') gelegenen (7) verbindet, dadurch gekennzeichnet, dass der Auswurfschacht (7, 7') im Bereich hinter der durch die beiden Achsen der Quetschwalzen (8, 8') definierten Ebene zumindest eine nach aussen führende Luftöffnung (13) aufweist, deren untere Öffnungskante im Wandungsteil des eine Walze (8, 8') umgebenden Auswurfschachts (7, 7') und/oder Luftführungskanals (9) vor dessen Übergang in den Auswurfschachtteil (7) liegt.

2. Häckselmaschine nach Anspr. 1, dadurch gekennzeichnet, dass die Luftöffnung (13) etwa in Breite der Quetschwalzen (8, 8') gestaltet ist.

3. Häckselmaschine nach Anspr. 1 bis 2, dadurch gekennzeichnet, dass die Luftöffnung (13) nach oben von einem schräg nach unten verlaufenden Blechteil (14) abgedeckt bzw. überdeckt ist.

## Claims

1. A chaff cutter for agricultural harvesting stock having a cutting device (1) with an additional break-up and expulsion device (8, 8'), subordinate to the chaff cutter (1) in a connecting expulsion passage (7, 7'), the break-up and expulsion devices being formed as two oppositely directed driven crushing rollers (8, 8') which are designed to post-accelerate the chaff cutter's stock, of which rollers at least one is surrounded by an air path (9) in the inoperative area on its outer circumference, the air path connecting the part of the expulsion passage (7') lying in front of the rollers (8, 8') with the part (7) thereof lying behind the rollers (8, 8'), characterised in that the expulsion passage (7, 7') in the region behind the plane defined by the axes of the two crushing rollers (8, 8') has at least one air valve (13) leading to the outside, a lower opening edge of which lies in a part of the wall of the expulsion passage (7, 7') surrounding one of the rollers (8, 8') and /or air path (9) in front of the transition of this part into the expulsion passage (7).

2. A chaff cutter according to Claim 1, characterised in that the air valve (13) is formed generally within the breadth of the crushing rollers (8, 8').

3. A chaffing machine according to Claim 1 or Claim 2, characterised in that the air valve (13) is concealed or covered by a piece of sheeting slanting downwards.

## Revendications

1. Machine de hachage pour produits de récolte agricoles, comprenant un dispositif supplémentaire de broyage et d'éjection (8, 8') monté à la suite du dispositif de hachage (1) dans la gaine d'éjection (7, 7') qui s'y raccorde et se présentant sous la forme de deux cylindres de broyage (8, 8') entraînés en sens contraires et constitués en vue de la poursuite de l'éjection du produit haché, dont l'un au moins est entouré dans sa région périphérique externe et inactive par un canal de guidage d'air (9) qui relie la partie (7') de la gaine d'éjection qui est à l'avant des cylindres (8, 8') à la partie située à l'arrière des cylindres (8, 8'), caractérisée en ce que la gaine d'éjection (7, 7') comprend à l'arrière du plan défini par les deux axes des cylindres de broyage (8, 8') au moins une ouverture d'air (13) débouchant vers l'extérieur, dont le bord d'ouverture inférieur est situé dans la partie de paroi de la gaine d'éjection (7, 7') entourant un cylindre (8, 8') et/ou dans le canal de guidage d'air (9) à l'avant de son raccordement avec la partie (7) de la gaine d'ejection.

2. Machine de hachage selon la revendication 1, caractérisée en ce que l'ouverture d'air (13) a sensiblement la largeur des cylindres de broyage (8, 8').

3. Machine de hachage selon les revendications 1 et 2, caractérisée en ce que l'ouverture d'air (13) est protégée ou recouverte par le haut par un élément de tôle (14) orienté en oblique vers le bas.

Schnitt A-A

Fig. 1

Schnitt B-B

Fig. 2